(19) Europäisches Patentamt
European Patent Office
Office européen des brevets

(11) Publication number : **0 432 780 B1**

(12) # EUROPEAN PATENT SPECIFICATION

(45) Date of publication of patent specification : **21.07.93 Bulletin 93/29**

(51) Int. Cl.$^5$ : **C09K 19/30,** G02F 1/137

(21) Application number : **90124130.7**

(22) Date of filing : **13.12.90**

(54) **Liquid crystal composition and liquid crystal display using said composition.**

(30) Priority : **13.12.89 JP 322889/89**

(43) Date of publication of application : **19.06.91 Bulletin 91/25**

(45) Publication of the grant of the patent : **21.07.93 Bulletin 93/29**

(84) Designated Contracting States : **AT BE CH DE FR GB IT LI LU NL SE**

(56) References cited :
**EP-A- 0 258 868**
**EP-A- 0 364 588**
**DE-A- 3 237 020**

(73) Proprietor : **CHISSO CORPORATION**
**6-32, Nakanoshima 3-chome Kitaku**
**Osaka (JP)**

(72) Inventor : **Uchida, Keiko**
**Room No. 301, 2-36, Kamiohri 2-chome**
**Ohnojoshi, Fukuokaken (JP)**
Inventor : **Hirose, Taku**
**27-2, Tatsumidaihigashi 3-chome**
**Ichiharashi, Chibaken (JP)**
Inventor : **Sawada, Shinichi**
**8890, Goi, Ichiharashi**
**Chibaken (JP)**

(74) Representative : **Hansen, Bernd, Dr. Dipl.-Chem. et al**
**Hoffmann, Eitle & Partner Patent- und Rechtsanwälte Arabellastrasse 4 Postfach 81 04 20**
**W-8000 München 81 (DE)**

EP 0 432 780 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a liquid crystal composition, and a liquid crystal display using the liquid crystal composition. More particularly, it is concerned with a liquid crystal composition suitable for use in highly multiplexed displays of a supertwisted birefringence effect mode, and a liquid crystal display using the liquid crystal composition.

TN (twisted nematic) liquid crystal cells having a twist angle of 90° have heretofore been used as display terminals of about 1/100 duty cycle, such as watches and electric calculators. In view of the principle, however, it has been believed that it is difficult to increase the number of duty cycles to more than the above value, because it is accompanied by a reduction of display quality.

On the contrary, a supertwisted birefringence effect mode utilizing the birefringence of a liquid crystal cell in which the highest possible twist angle to produce bistability, one of electro-optic characteristics of a chiral nematic liquid crystal, is controlled between 180° and 270° can be used as a liquid crystal display device of about 1/400 duty cycle. This system is hereinafter referred to as an "SBE mode", including supertwisted nematic modes using an alining organic film, called an STN mode and an HBE mode.

T.J. Scheffer & J. Nehling disclosed in Appl. Phys. Lett., 45, 1021 (1984) that the above SBE mode can provide a matrix display in which a display device is driven by the same driving manner as that by a matrix of the conventional 90° twisted TN mode, i.e., the fast scan addressing mode responding to the effective value of applied voltage. It is also reported that the SBE mode display has a much higher contrast and a much wider viewing angle than the 90° twisted TN display.

Liquid crystal compositions to be used in liquid crystal displays of the SBE mode are required to have the following characteristics:

(1) a steep voltage-transmittance curve,

(2) a high nematic-isotropic liquid phase transition temperature, i.e., clearing point (NI), and

(3) a low viscosity ($\eta$).

The characteristic (1) above is necessary for increasing the display contrast of liquid crystal displays of the SBE mode.

The characteristic (2) is needed to avoid coloring of the displays due to temperature dependency of refractive index anisotropy in the SBE mode; it is desirable that the clearing point be as high as possible.

In liquid crystal cells of the SBE mode, it is desirable that the viscosity be as low as possible, because the response time is in proportion to $\eta \cdot d^2$ wherein d indicates a cell thickness.

In fact, however, the conventional liquid crystal compositions fail to satisfy the above requirements; a liquid crystal composition satisfying the above requirements and thus suitable for use in displays of the SBE mode has not been found heretofore.

## SUMMARY OF THE INVENTION

An object of the present invention is to provide a liquid crystal composition, particularly suitable for use in liquid crystal displays of the SBE mode.

Another object of the present invention is to provide a liquid crystal composition which has a high clearing point and is excellent in the steepness of the voltage-transmittance curve.

Another object of the present invention is to provide a nematic liquid crystal composition which has a high clearing point and a low viscosity, is excellent in the steepness of the voltage-transmittance curve, and thus which provides high multiplexing.

Still another object of the present invention is to provide a liquid crystal display of the SBE mode, which is excellent in the contrast.

It has been found that the above objects can be attained by combining the specified compounds represented by the general formulas (I), (II), (III) and (IV) as defined hereinafter.

The present invention relates to a liquid crystal composition comprising:

(1) a first component consisting of at least one compound selected from the compounds represented by the general formula (I):

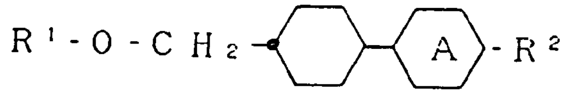

(I)

wherein

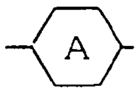 is 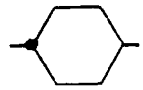 or 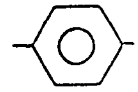 ;

$R^1$ is an alkyl group having 1 to 5 carbon atoms, preferably a linear alkyl group having 1 to 5 carbon atoms; and $R^2$ is an alkyl group having 2 to 8 carbon atoms, preferably a linear alkyl group having 2 to 8 carbon atoms, and at least one compound selected from the compounds represented by the general formula (II):

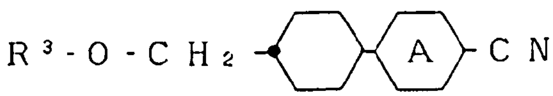 (II)

wherein

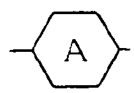

is the same as defined above; and $R^3$ is an alkyl group having 1 to 5 carbon atoms, preferably a linear alkyl group having 1 to 5 carbon atoms and
(2) a second component consisting of at least one compound selected from the compounds represented by the general formula (III):

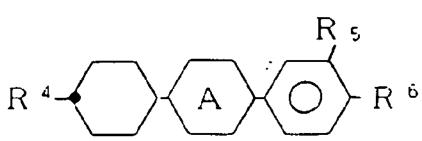 (III)

wherein

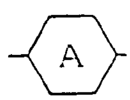

is the same as defined above; and $R^4$ is an alkyl group having 2 to 8 carbon atoms, preferably a linear alkyl group having 2 to 8 carbon atoms; $R^5$ is H or F; and $R^6$ is an alkyl group having 1 to 8 carbon atoms, preferably a linear alkyl group having 1 to 8 carbon atoms, an alkoxyl group having 1 to 8 carbon atoms, preferably a linear alkoxyl group having 1 to 8 carbon atoms, F or a CN group.

The present invention further relates to a liquid crystal composition comprising:

the above first and second components; and

(3) a third component consisting of at least one compound selected from the compounds represented by the general formula (IV):

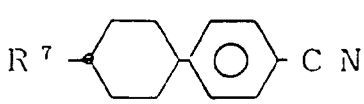 (IV)

wherein $R^7$ is an alkyl group having 2 to 10 carbon atoms, preferably a linear alkyl group having 2 to 10 carbon atoms or an alkenyl group having 2 to 10 carbon atoms, preferably a linear alkenyl group having 2

to 10 carbon atoms.

The present invention further relates to a liquid crystal display using any one of the above liquid crystal compositions.

In the present invention,

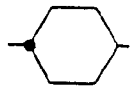

represents a trans-cyclohexylene ring, and

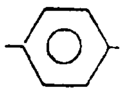

represents a p-phenylene ring.

DETAILED DESCRIPTION OF THE INVENTION

The first component comprises at least one compound represented by the general formula (I) and at least one compound represented by the general formula (II).

Of the compounds of the general formula (I), i.e., compounds represented by the following general formulas:

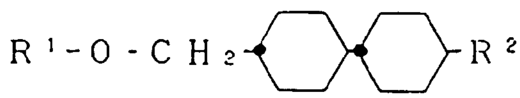

and

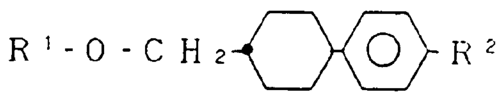

wherein $R^1$ and $R^2$ have the same meanings as defined above, compounds of the general formula (I) wherein

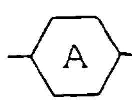

is

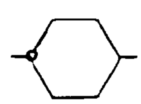

,

$R^1$ is a linear alkyl group having 1 to 3 carbon atoms, and $R^2$ is a linear alkyl group having 2 to 5 carbon atoms are preferably used.

Examples of such preferred compounds are:

trans-4-(trans-4-methoxymethylcyclohexyl)propylcyclohexane,
trans-4-(trans-4-methoxymethylcyclohexyl)butylcyclohexane,
trans-4-(trans-4-methoxymethylcyclohexyl)pentylcyclohexane, and
trans-4-(trans-4-methoxymethylcyclohexyl)ethylcyclohexane.

The compounds of the general formula (I) are characterized by having an alkoxymethyl group at the terminal thereof. It has now been found according to the present invention that the compounds having an alkoxymethyl group at the terminal thereof provide a large pretilt angle on a polyimide-based aligning film commonly used for the SBE mode.

It is generally known, as described in M. Akatsuka et al., Japan Display, pp. 400-403 (1986), that as the

pretilt angle increases, a d/p margin, i.e., $\triangle(d/p)$ as represented by the equation shown below becomes larger.

$$\triangle(d/p) = (d_2 - d_1)/p$$

where:

- d= cell thickness,
- p= helical pitch length,
- $d_1$= twist region in non-voltage applied condition, i.e., as obtained when a liquid crystal compound is placed in a wedge cell, and
- $d_2$= striped domain region in voltage applied condition, i.e,, as formed in neighborhood of threshold voltage.

As the d/p margin becomes larger, the yield of the cell and the degree of freedom of the cell thickness are more increased. For this reason, in the SBE mode, the d/p margin is desired to be large.

Thus the compounds of the general formula (I) are important for the liquid crystal composition of the present invention, particularly when the composition is used in liquid crystal displays of the SBE mode, in that the compounds increase the degree of freedom of the cell thickness.

A 15% by weight solution of trans-4-(trans-4-methoxymethylcyclohexyl)propylcyclohexane, one of the compounds of the general formula (I), in a cyanobiphenyl-based composition (trade name: GR-63, produced by Chisso Corp.) has a pretilt angle of 7.9°. On the other hand, a pretilt angle as determined in the same manner as above of trans-4-(trans-4-propylcyclohexyl)propylcyclohexane, which has the same skeleton as that of the above compound, but has an alkyl group in place of the alkoxymethyl group as the terminal group, is 7.1°.

In determining the pretilt angle, the sample is filled in a cell having a polyimide-based aligning film (trade name: PSI-A-2101, produced by Chisso Corp.) subjected to antiparallel rubbing treatment, and then the pretilt angle is measured according to the crystal rotation method (see T.J. Scheffer et al., Journal of Applied Physics, Vol. 48, No. 5, pp. 1783-1792 (1977)).

The compounds of the general formula (I) have clearing points ranging between 20°C and 50°C, and have particularly low viscosities.

The compounds of the general formula (I) are known compounds and are described in, for example, Japanese Patent Application Laid-Open No. 167535/1983.

Of the compounds of the general formula (II), i .e., compounds represented by the following general formulas:

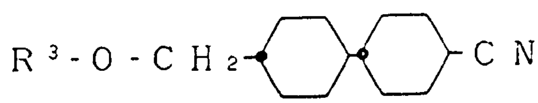

and

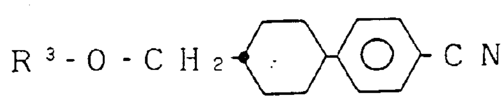

wherein $R^3$ has the same meaning as indicated above, compounds of the general formula (II) wherein

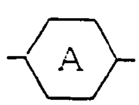

is

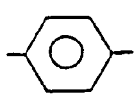 ,

and $R^3$ is a linear alkyl group having 1 to 3 carbon atoms are preferably used.

Examples of such preferred compounds are:
4-(trans-4-methoxymethylcyclohexyl)benzonitrile,
4-(trans-4-ethoxymethylcyclohexyl)benzonitrile, and
4-(trans-4-propoxymethylcyclohexyl)benzonitrile.

The compounds of the general formula (II) are characterized by having an alkoxymethyl group at the terminal thereof like the compounds of the general formula (I), and thus they provide a large pretilt angle on a polyimide-based film.

Trans-4-(trans-4-methoxymethylcyclohexyl)benzonitrile, one of the compounds of the general formula (II), has a pretilt angle as determined in the same manner as above of 7.0°. On the other hand, a pretilt angle of trans-4-(trans-4-ethylcyclohexyl)benzonitrile, which has the same skeleton as that of the above compound, but has an alkyl group as the terminal group, is 6.0°.

From the foregoing results, it can be said that the compounds of the general formulas (I) and (II) have larger pretilt angles, i.e., larger d/p margins than those compounds having an alkyl group at the terminal thereof.

Moreover the compounds of the general formula (II) have clearing points ranging between about 20°C and 70°C, and large positive dielectric anisotropy. This dielectric anisotropy is hereinafter indicated by $\Delta\varepsilon$.

The compounds of the general formula (II) are known compounds and are described in, for example, Japanese Patent Application No. 59956/1983.

The second component comprises at least one compound selected from the compounds represented by the the general formula (III), more specifically at least one of the compounds represented by the general formulas:

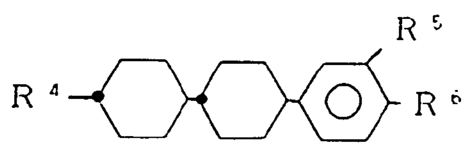

and

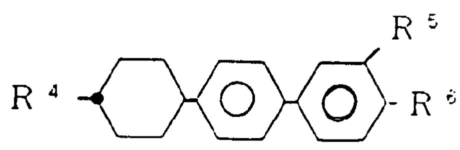

wherein $R^4$, $R^5$ and $R^6$ have the same meanings as indicated above.

Typical examples of the compounds of the general formula (III) are:
4-{trans-4-(trans-4-ethylcyclohexyl)cyclohexyl}benzonitrile,
4-{trans-4-(trans-4-propylcyclohexyl)cyclohexyl}benzonitrile,
4-{trans-4-(trans-4-butylcyclohexyl)cyclohexyl}benzonitrile,
4-{trans-4-(trans-4-pentylcyclohexyl)cyclohexyl}benzonitrile,
4-{trans-4-(trans-4-heptylcyclohexyl)cyclohexyl}benzonitrile,
4-{trans-4-(trans-4-ethylcyclohexyl)cyclohexyl}methylbenzene,
4-{trans-4-(trans-4-ethylcyclohexyl)cyclohexyl}ethylbenzene,
4-{trans-4-(trans-4-propylcyclohexyl)cyclohexyl}methylbenzene,
4-{trans-4-(trans-4-butylcyclohexyl)cyclohexyl}methylbenzene,
4-{trans-4-(trans-4-propylcyclohexyl)cyclohexyl)ethylbenzene,
4-{trans-4-(trans-4-ethylcyclohexyl)cyclohexyl}propylbenzene,
4-{trans-4-(trans-4-propylcyclohexyl)cyclohexyl}propylbenzene,
4-{trans-4-(trans-4-ethylcyclohexyl)cyclohexyl}methoxybenzene
4-{trans-4-(trans-4-ethylcyclohexyl)cylohexyl}ethoxybenzene,
4-{trans-4-(trans-4-propylcyclohexyl)cyclohexyl}methoxybenzene,
4-{trans-4-(trans-4-propylcyclohexyl)cyclohexyl}ethoxybenzene,
4-{trans-4-(trans-4-propylcyclohexyl)propoxybenzene,
4-{trans-4-(trans-4-ethylcyclohexyl)cyclohexyl}fluorobenzene,

4-{trans-4-(trans-4-propylcyclohexyl)cyclohexyl}fluorobenzene,
4-{trans-4-(trans-4-butylcyclohexyl)cyclohexyl}fluorobenzene,
4-{trans-4-(trans-4-pentylcyclohexyl)cyclohexyl}fluorobenzene,
4-{trans-4-(trans-4-ethylcyclohexyl)cyclohexyl}1,2-difluorobenzene,
4-{trans-4-(trans-4-propylcyclohexyl)cyclohexyl}1,2-difluorobenzene,
4-{trans-4-(trans-4-butylcyclohexyl)cyclohexyl}1,2-difluorobenzene,
4-{trans-4-(trans-4-pentylcyclohexyl)cyclohexyl}1,2-difluorobenzene,
4-(trans-4-ethylcyclohexyl)-4'-ethylbiphenyl,
4-(trans-4-propylcyclohexyl)-4'-ethylbiphenyl,
4-(trans-4-butylcyclohexyl)-4'-ethylbiphenyl, and
4-(trans-4-pentylcyclohexyl)-4'-ethylbiphenyl.

Of the compounds of the general formula (III), compounds represented by the general formula:

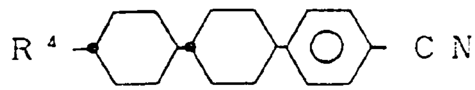

wherein $R^4$ has the same meaning as indicated above, are particularly preferred to use.

The compounds of the general formula (III) are known compounds and are described in, for example, Japanese Patent Application Laid-Open Nos. 10552/1983, 21359/1982, 64626/1982, 154135/1982, 152362/1984, and 165328/1982, and Japanese Patent Publication Nos. 3324/ 1983, 34928/1985, 7169/1988, and 4496/1989.

The compounds of the general formula (III) are low in viscosity although they have three six-membered rings, and they are high temperature liquid crystal compounds having a clearing point ranging between about 100°C and 250°C.

The third component comprises at least one compound selected from the compounds represented by the general formula (IV). Of these compounds, compounds of the general formula (IV) in which $R^7$ is a linear alkyl group having 2 to 7 carbon atoms or a linear alkenyl group having 3 to 5 carbon atoms are preferably used. When $R^7$ is an alkenyl group, the position at which a double bond is located is not critical, but it is desired that an inner double bond be in a trans-configuration.

Examples of such preferred compounds are:

4-(trans-4-ethylcyclohexyl)benzonitrile,
4-(trans-4-propylcyclohexyl)benzonitrile,
4-(trans-4-butylcyclohexyl)benzonitrile,
4-(trans-4-pentylcyclohexyl)benzonitrile,
4-(trans-4-heptylcyclohexyl)benzonitrile,
4-{trans-4-(2-propenyl)cyclohexyl}benzonitrile,
4-{trans-4-(3-butenyl)cyclohexyl}benzonitrile,
4-{trans-4-(2-butenyl)cyclohexyl}benzonitrile,
4-{trans-4-(2-pentenyl)cyclohexyl}benzonitrile,
4-{trans-4-(3-pentenyl)cyclohexyl}benzonitrile,

and

4-{trans-4-(4-pentenyl)cyclohexyl}benzonitrile.

The compounds of the general formula (IV) are known compounds and are described in, for example, Japanese Patent Publication No. 38146/1981 and Japanese Patent Application Laid-Open No. 176221/1984.

The compounds of the general formula (IV) are characterized in that $\triangle\varepsilon$ is positive and large and the viscosity is low, but they have clearing points as low as about 30 to 70°C.

When two or more of the compounds of the general formula (I), (II), (III), or (IV) are used in combination with each other, the proportions of the compounds used are not critical and can be determined appropriately depending on the desired characteristics of a liquid crystal composition to be prepared.

The liquid crystal composition of the present invention, in one embodiment thereof, contains the above-described first and second components as main components.

The proportion of the first component is 20 to 50% by weight based on the total weight of the liquid crystal composition. If the proportion of the first component is less than 20% by weight, the d/p margin is increased only insufficiently. On the other hand, if the proportion of the first component is more than 50% by weight, in some cases, the clearing point of the resulting liquid crystal composition is decreased. This decrease in the clearing point is undesirable because the temperature dependency of refractive index anisotropy ($\triangle n$) is increased, leading to changes in an optical path ($d \cdot \triangle n$) of birefringence, and thus to changes in color.

The proportion of the second component is 10 to 70% by weight based on the total weight of the liquid crystal composition. If the proportion of the second component is less than 10% by weight, the clearing point of the resulting liquid crystal composition is sometimes decreased. On the other hand, if the proportion of the second component is more than 70% by weight, the lower limit temperature of the nematic phase is increased. This increase of the lower limit temperature is undesirable because the operating temperature range at the lower temperature side is sometimes reduced.

The total amount of the first and second components is at least 40% by weight of the composition. If the total amount is less than 40% by weight, in some cases, the nematic phase temperature range of the resulting composition is not sufficiently wide.

Although the ratio of the first component to the second component is not critical, it is preferred that the weight ratio of the first component to the second component (first component/second component) be 0.2/1 to 5/1.

In another embodiment, the liquid crystal composition of the present invention contain, as well as the first and second components, the third component as main components. The proportions of the first and second components are the same as in the aforementioned liquid crystal composition. That is, the proportions of the first, and second components are 20 to 50% by weight and 10 to 70% by weight, respectively, based on the total weight of the liquid crystal composition.

The proportion of the third component is 10 to 40% by weight and preferably 10 to 30% by weight. If the proportion of the third component is less than 10% by weight, the threshold voltage is sometimes decreased only insufficiently depending on a combination of the first, second and third components. On the other hand, if the proportion of the third component is more than 40% by weight, the clearing point of the resulting liquid crystal composition is sometimes decreased, exerting adverse influences as described above.

The total amount of the first, second and third components is at least 50% by weight of the composition.

The liquid crystal composition of the present invention may contain, as well as the aforementioned components, suitable amounts of other generally known nematic liquid crystals or mesogenic compounds for the purpose of controlling threshold voltage, liquid crystal. temperature range, or viscosity, for example, but within the range such that they do not deteriorate the effects of the present invention.

Examples of such known compounds which can be preferably used in the present invention are shown below.

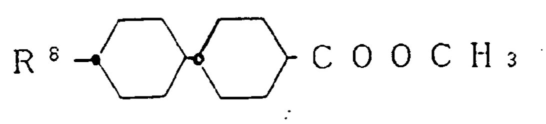

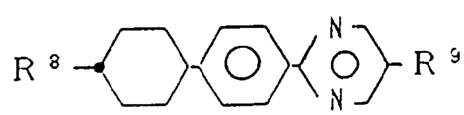

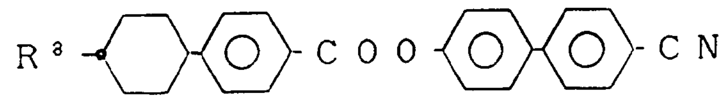

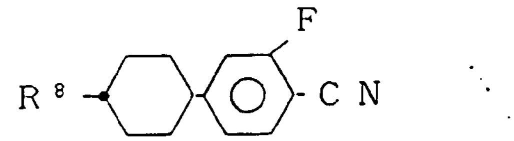

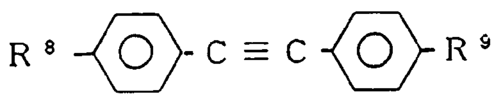

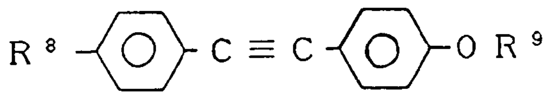

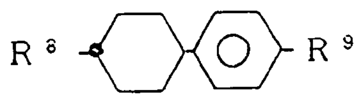

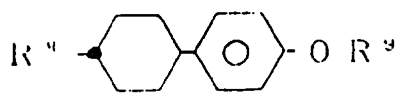

In the above formulas, $R^8$ is an alkyl group having 1 to 8 carbon atoms, and $R^9$ is an alkyl group having 1 to 8 carbon atoms.

Specific examples of the compounds represented by the above formulas are:

4'-cyano-4-biphenylyl 4-(trans-4-ethylcyclohexyl) benzoate,
4'-cyano-4-biphenylyl 4-(trans-4-propylcyclohexyl) benzoate,
4'-cyano-4-biphenylyl 4-(trans-4-butylcyclohexyl) benzoate,
4'-cyano-4-biphenylyl 4-(trans-4-pentylcyclohexyl) benzoate,
4-ethyl-4'-methyldiphenylacetylene,
4-propyl-4'-methyldiphenylacetylene,
4-butyl-4'-methyldiphenylacetylene,
4-hexyl-4'-methyldiphenylacetylene,
4,4'-diethyldiphenylacetylene,
4,4'-dipropyldiphenylacetylene,
4,4'-dibutyldiphenylacetylene,
4-ethoxy-4'-propyldiphenylacetylene,
4-ethoxy-4'-pentyldiphenylacetylene,
2-{4-(trans-4-propylcyclohexyl)phenyl}-5-ethylpyrimidine,
2-{4-(trans-4-propylcyclohexyl)phenyl}-5-propylpyrimidine,
2-{4-(trans-4-propylcyclohexyl)phenyl}-5-butylpyrimidine,
4-(trans-4-propylcyclohexyl)ethylbenzene,
4-(trans-4-ethylcyclohexyl)ethoxybenzene,
4-(trans-4-propylcyclohexyl)ethoxybenzene,
4-(trans-4-propylcyclohexyl)propoxybenzene,
4-(trans-4-propylcyclohexyl)-2-fluorobenzonitrile,

and

4-(trans-4-pentylcyclohexyl)-2-fluorobenzonitrile.

The liquid crystal display of the present invention can be produced by known techniques except that the aforementioned liquid crystal composition is used as a liquid crystal. For example, it can be produced by the following process.

First, a pattern electrode is formed in a transparent electrode substrate. After formation of a molecular aligning layer on the transparent electrode substrate employing an aligning agent, a cell is fabricated. After the cell is sealed with a spacer, for example, the liquid crystal composition is introduced into the cell through a filling hole, and then the hole is sealed. Attachments such as polarizers and reflective plates are attached to obtain a liquid crystal display.

The liquid crystal composition of the present invention is suitably improved in characteristics required for liquid crystal compositions to be used in liquid crystal displays of the SBE mode. In particular, the steepness of the voltage-transmittance curve is greatly improved while maintaining a high clearing point and a low viscosity. That is, the liquid crystal composition of the present invention has a high clearing point and a low viscosity, and moreover is excellent in the steepness of the voltage-transmittance curve.

The liquid crystal composition of the present invention is greatly suitable for use in liquid crystal displays of the multiplexing display mode, because an a value indicating the steepness of the voltage-transmittance curve is very close to 1.

In the liquid crystal composition of the present invention, as well as the steepness of the voltage-transmittance curve, characteristics as described above can be improved in a well balanced manner by compounding the first and second components, or the first, second and third components in suitable proportions.

The first component of the liquid crystal composition of the present invention comprises, as described above, two or more compounds having an alkoxymethyl group at the terminal thereof. These compounds have larger pretilt angles as compared with compounds having an alkyl group at the terminal thereof and, therefore, it is believed that the compounds of the first component contribute to an increase in the d/p margin and thus to an increase in the yield of liquid crystal display product.

The liquid crystal composition of the present invention possesses the aforementioned characteristics and, therefore, realizes multiplexing of 1/100 to 1/300 duty cycle in the SBE mode.

The liquid crystal composition of the present invention can be used effectively in the 90° TN mode which does not always need the steepness of the voltage-transmittance curve.

Use of the liquid crystal composition of the present invention, having characteristics as described above, provides a liquid crystal display which is excellent in the steepness of the voltage-transmittance curve, is of high multiplexing, and further which is good in contrast.

The present invention is described in greater detail with reference to the following examples. In the examples, percents (%) are all by weight, and alkyl and alkoxy groups are all linear unless otherwise indicated.

Characteristic values of the liquid crystal compositions were measured by the following methods.

Steepness of Voltage-Transmittance Curve ($\alpha$):

The steepness of the voltage-transmittance curve is evaluated by a parameter ($\alpha$) defined by the following equation:

$$\alpha = V_{80}/V_{10}$$

where:

$V_{80}$= voltage at which transmittance of light in an optical axis direction vertical to a display surface is 80% of maximum transmittance, and

$V_{10}$= voltage at which trasmittance of light in an optical axis direction vertical to a display surface is 10% (threshold voltage).

As the parameter ($\alpha$) approaches 1, the voltage-transmittance curve becomes more steep. $V_{10}$ and $V_{80}$ are measured by the following method.

A test sample is prepared by adding a chiral substance (trade name: S-811, produced by E. Merck.) to a liquid crystal composition in such a manner that d/p=0.42 where:

d= cell thickness, and

p= intrinsic helical pitch of a chiral nematic liquid crystal,

at which there is no formation of either lower twist or striped domain. This sample is introduced into a cell which has a polyimide-based aligning film (trade name: PSI-871-PPP, produced by Chisso Corp.) subjected to rubbing on the opposing plane transparent electrodes, and which has a twist angle of 180° , under the condition that $\triangle \cdot d$=800 nm. Polarizing plates are bonded to the top and bottom of the cell in such a manner that the rubbing direction of the aligning film and the absorption axis of the polarizing plate are at an angle of 45° and the absorption axes of the upper and lower polarizing plates are overlapped. Thereafter, $V_{10}$ and $V_{80}$ are measured.

The above aligning film has a pretilt angle of 3.5° when a phenylcyclohexane-based liquid crystal composition (trade name: ZLI-1132, produced by E. Merck.) is employed. The pretilt angle is measured by the crystal rotation method (T.J. Sheffer et al., Journal of Applied Physics, Vol. 48, No. 5, pp. 1783-1792 (1977)).

Number of Multiplexing (Nmax):

The number of multiplexing is evaluated by a parameter Nmax defined by the following equation:

$$Nmax = \left(\frac{\alpha^2 + 1}{\alpha^2 - 1}\right)^2$$

where $\alpha$ is the same as indicated above.

As the parameter Nmax increases, higher multiplexing becomes possible.

Viscosity ($\eta$):

Measured with a rotation viscometer (E-type viscometer manufactured by Tokyo Keiki Co., Ltd.).

Example 1

First Component:

Trans-4-(trans-4-methoxymethylcyclohexyl)propylcyclohexane 20%

Trans-4-(trans-4-methoxymethylcyclohexyl)pentylcyclohexane 10%

4-(Trans-4-methoxymethylcyclohexyl)benzonitrile 20%,

Second Component:

4-{Trans-4-(trans-4-ethylcyclohexyl)cyclohexyl}-benzonitrile 10%

4-{Trans-4-(trans-4-propylcyclohexyl)cyclohexyl}-fluorobenzene 5%

4-{Trans-4-(trans-4-propylcyclohexyl)cyclohexyl}-methylbenzene 5%

4-{Trans-4-(trans-4-propylcyclohexyl)cyclohexyl}-propylbenzene 15%

4-(Trans-4-pentylcyclohexyl)-4'-ethylbiphenyl 15%.

The above compounds were mixed to prepare a liquid crystal composition. Characteristic values of the liquid crystal composition are shown in Table 1.

Example 2

First Component:

Trans-4-(trans-4-methoxymethylcyclohexyl)propylcyclohexane 20%

Trans-4-(trans-4-methoxymethylcyclohexyl)pentylcyclohexane 15%

4-(Trans-4-methoxymethylcyclohexyl)benzonitrile 15%,

Second Component:

4-{Trans-4-(trans-ethylcyclohexyl)cyclohexyl}benzonitrile 10%

4-{Trans-4-(trans-propylcyclohexyl)cyclohexyl}benzonitrile 10%

4-{Trans-4-(trans-4-pentylcyclohexyl)cyclohexyl}benzonitrile 10%,

Third Component:

4-{Trans-4-(3-butenyl)cyclohexyl}benzonitrile 10%

4-{Trans-4-(3-pentenyl)cyclohexyl}benzonitrile 10%.

The above compounds were mixed to prepare a liquid crystal composition. Characteristic values of the liquid crystal composition are shown in Table 1.

Example 3

First Component:

Trans-4-(trans-4-methoxymethylcyclohexyl)propylcyclohexane

10%

4-(Trans-4-methoxymethylcyclohexyl)benzonitrile

10%,

Second Component:

4-{Trans-4-(trans-4-ethylcyclohexyl)cyclohexyl}-benzonitrile 10%

4-{Trans-4-(trans-4-propylcyclohexyl)cyclohexyl}-benzonitrile 10%,

Third Component:

4-(Trans-4-propylcyclohexyl)benzonitrile

30%,

Other Compounds:

4-(Trans-4-propylcyclohexyl)ethoxybezene

20%

4'-Cyano-4-biphenylyl 4-(trans-4-pentylcyclohexyl)-benzoate 5%

4'-Cyano-4-biphenylyl 4-(trans-4-propylcyclohexyl)-benzoate 5%.

The above compound were mixed to prepare a liquid crystal composition. Characteristic values of the liquid crystal composition are shown in Table 1.

Example 4

First Component:

Trans-4-(trans-4-methoxymethylcyclohexyl)propylcyclohexane 10%

Trans-4-(trans-4-methoxymethylcyclohexyl)pentylcyclohexane 15%

4-(Trans-4-methoxymethylcyclohexyl)benzonitrile 15%,

Second Component:

4-{Trans-4-(trans-4-ethylcyclohexyl)cyclohexyl}-benzonitrile 10%,

Third Component:

4-(Trans-4-propylcyclohexyl)benzonitrile 10%

4-{Trans-4-(3-butenyl)cyclohexyl}benzonitrile 10%,

Other Compounds:

2-{4-(Trans-4-propylcyclohexyl)phenyl}-5-ethylpyrimidine 10%

2-{4-(Trans-4-propylcyclohexyl)phenyl}-5-propylpyrimidine 10%

2-{4-(Trans-4-propylcyclohexyl)phenyl}-5-butylpyrimidine 10%.

The above compounds were mixed to prepare a liquid crystal composition. Characteristic values of the liquid crystal composition are shown in Table 1.

Example 5

First Component:

Trans-4-(trans-4-methoxymethylcyclohexyl)propylcyclohexane 10%

4-(Trans-4-methoxymethylcyclohexyl)benzonitrile 10%,

Second Component:

4-{Trans-4-(trans-4-butylcyclohexyl)cyclohexyl}-benzonitrile 10%

4-{Trans-4-(trans-4-ethylcyclohexyl)cyclohexyl}-methylbenzene 5%

4-{Trans-4-(trans-4-propylcyclohexyl)cyclohexyl}-methylbenzene 5%

4-{Trans-4-(trans-4-propylcyclohexyl)cyclohexyl}-methoxybenzene 5%

4-{Trans-4-(trans-4-propylcyclohexyl)cyclohexyl}-propylbenzene 10%

4-{Trans-4-(trans-4-propylcyclohexyl)cyclohexyl}-fluorobenzene 5%,

Third Component:

4-(Trans-4-heptylcyclohexyl)benzonitrile 20%,

Other Compounds:

| | |
|---|---|
| 4-Ethyl-4'-methyldiphenylacetylene | 5% |
| 4,4'-Dibutyldiphenylacetylene | 5% |
| 4-Hexyl-4'-methyldiphenylacetylene | 10% |

The above compounds were mixed to prepare a liquid crystal composition. Characteristic values of the liquid crystal composition are shown in Table 1.

Comparative Example

For comparison, known compounds commonly used as shown below were mixed to prepare a liquid crystal composition. Characteristic values of the liquid crystal composition are shown in Table 1.

| | |
|---|---|
| 4'-Ethyl-4-cyanobiphenyl | 15% |
| 4'-Butyl-4-cycanobiphenyl | 10% |
| 4-Butoxyphenyl trans-4-propylcyclohexane-carboxylate | 16% |
| 4-Ethoxyphenyl trans-4-butylcyclohexane-carboxylate | 12% |
| 4-Methoxyphenyl trans-4-pentylcyclohexane-carboxylate | 12% |
| 4-Ethoxyphenyl trans-4-propylcyclohexane-carboxylate | 10% |
| 4-Ethoxyphenyl trans-4-pentylcyclohexane-carboxylate | 10% |
| 4'-(Trans-4-pentylcyclohexyl)-4-cyanobiphenyl | 15% |

Table 1

| | Clearing Point (°C) | $\Delta n$ | $\eta$ (cp) | $V_{10}$ (V) | $\alpha$ | Nmax |
|---|---|---|---|---|---|---|
| Ex. 1 | 101.5 | 0.101 | 25.5 | 2.26 | 1.087 | 144 |
| 2 | 98.5 | 0.102 | 27.5 | 2.02 | 1.066 | 245 |
| 3 | 93.5 | 0.129 | 27.3 | 1.59 | 1.079 | 174 |
| 4 | 98.5 | 0.119 | 26.8 | 1.73 | 1.093 | 127 |
| 5 | 88.2 | 0.129 | 20.7 | 1.87 | 1.082 | 161 |
| Com. Ex. 1 | 78.8 | 0.142 | 33.9 | 2.03 | 1.120 | 79 |

$\Delta n$, $V_{10}$, $\alpha$: measured at 25°C.

$\eta$: measured at 20°C.

It can be seen from the results of Table 1 that the liquid crystal composition of the present invention has a high clearing point and a low viscosity, and further is excellent in the steepness of the voltage-transmittance curve, providing higher multiplexing.

## Claims

1. A liquid crystal composition comprising:
   (1) a first component consisting of at least one compound selected from the compounds represented by the general formula (I):

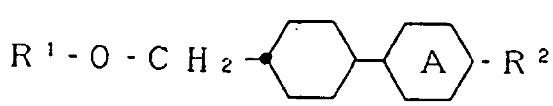

(I)

wherein

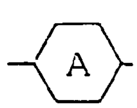 is 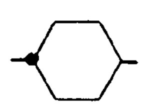 or 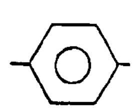 ;

$R^1$ is an alkyl group having 1 to 5 carbon atoms and $R^2$ is an alkyl group having 2 to 8 carbon atoms, and at least one compound selected from the compounds represented by the general formula (II):

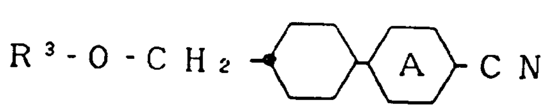

(II)

wherein

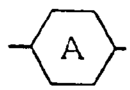

is the same as defined above;
and $R^3$ is an alkyl group having 1 to 5 carbon atoms, and
(2) a second component consisting of at least one compound selected from the compounds represented by the general formula (III):

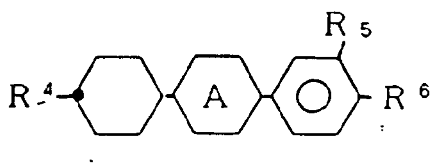

(III)

wherein

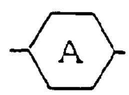

is the same as defined above;
$R^4$ is an alkyl group having 2 to 8 carbon atoms;
$R^5$ is H or F; and $R^6$ is an alkyl group having 1 to 8 carbon atoms, an alkoxyl group having 1 to 8 carbon atoms, F or a CN group.

2. A composition as claimed in Claim 1 wherein the proportions of the first component and the second component are 20 to 50% by weight and 10 to 70% by weight, respectively, based on the total weight of the composition, and the total amount of the first and second components is at least 40% by weight of the composition.

3. A composition as claimed in Claim 1, further including a third component consisting of at least one compound selected from the compounds represented by the general formula (IV):

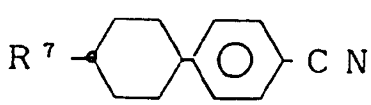

(IV)

wherein $R^7$ is an alkyl group having 2 to 10 carbon atoms or an alkenyl group having 2 to 10 carbon atoms.

4. A composition as claimed in Claim 3 wherein the the proportions of the first component, the second component and the third component are 20 to 50% by weight, 10 to 70% by weight and 10 to 40% by weight, respectively, based on the total weight of the composition, and the total amount of the first, second and third components is at least 50% by weight of the composition.

5. A composition as claimed in Claim 1, further including at least one known nematic liquid crystal compound or mesogenic compound.

6. A liquid crystal display using a liquid crystal composition as claimed in claim 1.

**Patentansprüche**

1. Flüssigkristallzusammensetzung, enthaltend:

(1) eine erste Komponente, bestehend aus mindestens einer Verbindung, ausgewählt aus den Verbindungen dargestellt durch Formel (I):

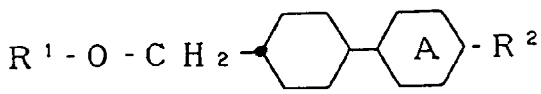

(I)

worin

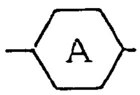 ist 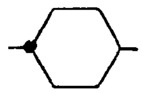 oder 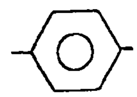 ;

$R^1$ ist eine Alkylgruppe mit 1 bis 5 Kohlenstoffatomen, und $R^2$ ist eine Alkylgruppe mit 2 bis 8 Kohlenstoffatomen, und mindestens einer Verbindung ausgewählt aus den Verbindungen dargestellt durch die Formel (II):

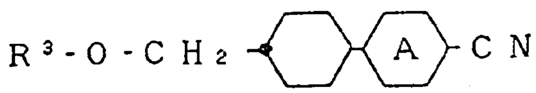

(II)

worin

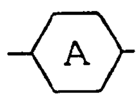

dieselbe Bedeutung wie oben hat; und

$R^3$ ist eine Alkylgruppe mit 1 bis 5 Kohlenstoffatomen, und

(2) eine zweite Komponente, bestehend aus mindestens einer Verbindung, ausgewählt aus den Verbindungen dargestellt durch die Formel (III):

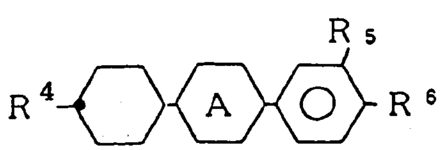

(III)

worin

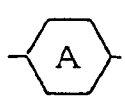

dieselbe Bedeutung wie oben hat;

$R^4$ ist eine Alkylgruppe mit 2 bis 8 Kohlenstoffatomen,

$R^5$ ist H oder F; und $R^6$ ist eine Alkylgruppe mit 1 bis 8 Kohlenstoffatomen, eine Alkoxylgruppe mit 1 bis 8 Kohlenstoffatomen, F oder eine CN-Gruppe.

2. Zusammensetzung nach Anspruch 1, worin die Anteile der ersten Komponente 20 bis 50 Gew.-% und der zweiten Komponente 10 bis 70 %, bezogen auf das Gesamtgewicht der Zusammensetzung, sind und die Gesamtmenge der ersten und zweiten Komponente mindestens 40 Gew.-% der Zusammensetzung ist.

3. Zusammensetzung nach Anspruch 1, die ferner eine dritte Komponente enthält, bestehend aus mindestens einer Verbindung ausgewählt aus den Verbindungen dargestellt durch die Formel (IV):

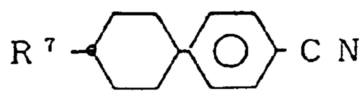

(IV)

worin $R^7$ eine Alkylgruppe mit 2 bis 10 Kohlenstoffatomen oder eine Alkenylgruppe mit 2 bis 10 Kohlenstoffatomen ist.

4. Zusammensetzung nach Anspruch 3, worin die Anteile der ersten Komponente 20 bis 50 Gew.-%, der zweiten Komponente 10 bis 70 Gew.-% und der dritten Komponente 10 bis 40 Gew.-% sind, bezogen auf das Gesamtgewicht der Zusammensetzung, und die Gesamtmenge der ersten, zweiten und dritten Komponente mindestens 50 Gew.-% der Zusammensetzung ist.

5. Zusammensetzung nach Anspruch 1, die ferner mindestens eine bekannte nematische Flüssigkristallverbindung oder mesogene Verbindung umfaßt.

6. Flüssigkristallanzeige unter Verwendung einer Flüssigkristallzusammensetzung nach Anspruch 1.

## Revendications

1. Composition de cristaux liquides comprenant :
(1) un premier constituant formé d'au moins un composé choisi parmi les composés représentés par la formule générale (I) :

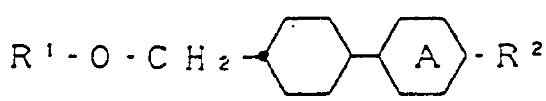

(I)

dans laquelle

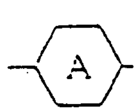 est 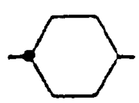 ou 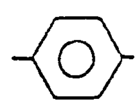 ;

$R^1$ est un groupe alkyle en $C_1$ à $C_5$, et
$R^2$ est un groupe alkyle en $C_2$ à $C_8$, et au moins un composé choisi parmi les composés représentés par la formule générale (II) :

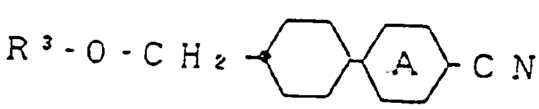

(II)

dans laquelle

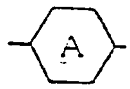

est tel que défini ci-dessus; et $R^3$ est un groupe alkyle en $C_1$ à $C_5$, et

(2) un second constituant formé d'au moins un composé choisi parmi les composés représentés par la formule générale (III) :

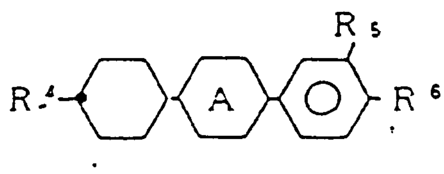

(III)

dans laquelle

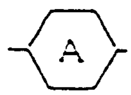

est tel que défini ci-dessus;

$R^4$ est un groupe alkyle en $C_2$ à $C_8$, $R^5$ est H ou F; et $R^6$ est un groupe alkyle en $C_1$ à $C_8$, un groupe alcoxyle en $C_1$ à $C_8$, F ou un groupe CN.

2. Composition selon la revendication 1, dans laquelle des proportions du premier constituant et du second constituant sont de 20 à 50% en poids et de 10 à 70% en poids, respectivement, par rapport au poids total de la composition, et la quantité totale du premier et du second constituant est d'au moins 40 % en poids de la composition.

3. Composition selon la revendication 1, contenant en outre un troisième constituant formé d'au moins un composé choisi parmi les composés représentés par la formule générale (IV) :

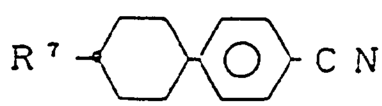

(IV)

dans laquelle $R^7$ est un groupe alkyle en $C_2$ à $C_{10}$ ou un groupe alcényle en $C_2$ à $C_{10}$.

4. Composition selon la revendication 3, dans laquelle les proportions du premier constituant, du second constituant et du troisième constituant sont de 20 à 50% en poids, de 10 à 70% en poids et de 10 à 40% en poids, respectivement, par rapport au poids total de la composition, et la quantité totale du premier, du second et du troisième constituants est d'au moins 50 % en poids de la composition.

5. Composition selon la revendication 1, contenant en outre au moins un composé à cristaux liquides nématiques connu ou un composé mésogène.

6. Affichage à cristaux liquides utilisant une composition de cristaux liquides selon la revendication 1.